# EUROPEAN PATENT APPLICATION

(11) **EP 4 275 503 A1**
(43) Date of publication of application: **15.11.2023**
(21) Application number: 22172775.3
(22) Date of filing: 11.05.2022
(51) Int. Cl.: A22C 11/12

(54) **OFF-POWER GRID CLIPPING MACHINE FOR PRODUCING SAUSAGE-SHAPED PRODUCTS**

(71) Applicant: Poly-clip System GmbH & Co. KG, 65795 Hattersheim (DE)
(72) Inventor: Schirmeister, Gregor, 63075 Offenbach (DE); Bienert, Olaf, 65529 Waldems (DE); Melchert, Uwe, 60385 Frankfurt am Main (DE)
(74) Representative: Eisenführ Speiser

(57) **Abstract**

The present invention relates to an off-power grid production system (O), comprising: a production machine (P) for producing contamination-sensitive products, in particular a clipping machine (C) for producing sausage-shaped products, having a machine housing (100); at least one control unit (200) for controlling at least the production machine (P), arranged in the machine housing (100) of the production machine (P); at least one preferably rechargeable battery (300) for supplying the control unit (200) with power having at least one output power supply terminal (330); and at least one battery compartment (110) for releasably accommodating the battery (300), said battery compartment (110) being provided on the machine housing (100) and having at least one input power supply terminal (320) in communication with the control unit (200) for supplying the control unit (200) with power, the input power supply terminal (320) being electrically conductively connectable to the output power supply terminal (330) of the battery (300).

## Description

### FIELD OF THE INVENTION

The present invention relates to an off-power grid production system, which i.a. comprises a production machine for producing contamination-sensitive products, in particular a clipping machine for producing sausage-shaped products.

### BACKGROUND ART

In the practice, it is known that production machines for producing contamination-sensitive products, such as clipping machines for producing sausage-shaped products, like sausages, include a control unit for controlling the production machine. The production machine may be pneumatically driven, wherein in the case of a clipping machine, the process of clipping a clip on a sausage-shaped product is achieved by a pneumatic drive unit. In contrast, control units of such conventional production machines need electric power, which is supplied via a power cable connected to a power supply network.

However, this leads to several disadvantages that occur particularly during the cleaning process of the production machine. In general, production machines for producing contamination-sensitive products have at least to be cleaned once a day because it has to be ensured that the produced products are free of any contaminations. Such contaminations could be food residues, dust and/or other impurities. This regular cleaning is done with a liquid such as water, to which a cleaning agent may be added.

The disadvantage here is that for safety reasons, the production machine must thus be disconnected from the power supply network before the start of the cleaning process and must be reconnected after its end, which adds additional time to the cleaning process.

In addition, the need to supply electrical power to the control unit via a power cable results in a cable lying on the floor in the working area of the machine, which can also result in a threat to the operator. Furthermore, it is necessary to either provide a power supply network connection within reach of the cable delivered with the machine or, if this is not possible, to use an appropriately long cable. However, this considerably restricts the flexibility with regard to the installation location of the machine. This is especially the case for cables already permanently installed underground.

It is an objective of the present invention to reduce the risk to the operator during a cleaning process and to reduce the time required for cleaning. In addition, the flexibility with regard to the installation location of the production system is to be increased.

### SUMMARY OF THE INVENTION

The objective is achieved by an off-power grid production system according to the present invention as defined in the independent claim 1 as well as a production machine pursuant to claim 14 and a preferably rechargeable battery being adapted to be used in the off-power grid production system as defined in claim 15.

According to a first aspect, an off-power grid production system comprises a production machine for producing contamination-sensitive products, in particular a clipping machine for producing sausage-shaped products, having a machine housing; at least one control unit for controlling at least the production machine, arranged in the machine housing of the production machine; at least one preferably rechargeable battery for supplying the control unit with power having at least one output power supply terminal; and at least one battery compartment for releasably accommodating the battery, said battery compartment being provided on the machine housing and having at least one input power supply terminal in communication with the control unit for supplying the control unit with power, the input power supply terminal being electrically conductively connectable to the output power supply terminal of the battery.

The use of a battery makes it possible to operate a production machine for producing contamination-sensitive products being part of the inventive off-power grid production system and start or finish the cleaning process at the end of production without the need of further preparation or post-processing steps. In addition, the risk to the operator is reduced because there are no cables on the floor and, at the same time, flexibility is increased with regard to the installation location of such a machine.

In some embodiments of the off-power grid production system, the input power supply terminal of the battery compartment is formed by at least one preferably fluid-tight connecting cable adapted to be releasably connected to the output power supply terminal of the battery in a fluid-tight manner via at least one plug. Thus, it can be ensured that no fluid can enter the connection contacts so that no danger arises for the operator during cleaning process. Furthermore, should this become necessary, the replacement of the battery is facilitated.

In principle, it is possible for the battery compartment to be formed merely by a suitably shaped receptacle that is easily accessible from the outside. However, in order to facilitate the cleaning process and in particular to prevent liquid and/or impurities from entering the interior of the machine, it is further advantageous if the battery compartment is accessible from outside the machine housing, preferably by means of a door being further preferably releasably lockable. By doing this, the handling of the battery is improved.

To facilitate battery replacement and/or to ensure that the battery is in the correct position for safe power supply to the control unit after replacement, it is advantageous if the battery compartment has positioning means for positioning the battery when inserted into the battery compartment, and wherein preferably the battery has counter-positioning means which cooperate with the positioning means of the battery compartment when the battery is inserted into the battery compartment. Thus, the operator can easily remove and introduce the battery in the corresponding battery compartment. Further, a predefined positioning of the battery in the battery compartment is ensured.

In some embodiments of the off-power grid production system, the bottom of the battery compartment comprises at least one drain hole for draining fluid inside the battery compartment.

In principle, the battery can be inserted directly into the battery compartment. However, to facilitate handling, especially in the event of a rechargeable battery, it is still advantageous, if the system further comprises a preferably fluid-tight battery box for reversibly receiving the at least one battery, the battery box being reversibly insertable into the battery compartment and having at least a connecting terminal for connecting the output power supply terminal of the battery to the input power supply terminal of the battery compartment. By using a fluid-tight battery box, the handling is even more simplified. In particular, multiple batteries with their battery boxes can be easily stored and/or charged in a charging station without the risk of damage to the batteries during handling and/or charging, as they are protected by the battery box.

In some embodiments, in the machine housing the battery/battery box and the control unit are arranged one above the other. Preferably, the battery/battery box is positioned underneath the control unit. Thus, a compact and space-saving design is ensured.

In some embodiments of the off-power grid production system, the battery box has an additional charging terminal for charging the rechargeable battery received in the battery box, which is preferably accessible with the battery box inserted in the battery compartment. According to this, the rechargeable battery has not to be exchanged while one battery is empty. Instead, the battery can be recharged, while the battery is in operating mode. Thus, the production machine can operate while charging the battery at the same time.

In some embodiments of the off-power grid production system, the battery box has handling means for inserting and removing the battery box into and from the battery compartment. Thus, the handling of the battery box is simplified.

In some embodiments of the off-power grid production system, the battery box consists at least of two parts, a lower part and an upper part, wherein the lower part is fixed to the upper part by a screw having a stop element on its end which presses on the battery and holds it in a predefined position. The stop element may be formed of a rather soft material, which does not damage the battery. According to this, the battery in the battery box can be exchanged fast an easily by an operator. Preferably, further or additionally, the lower segment and/or the upper segment of the battery box is fixed to a front plate of the battery box.

In some embodiments of the off-power grid production system, the connecting terminal of the battery box is provided by at least one socket into which the plug of the connecting cable is detachably insertable for establishing an electrical connection between the output power supply terminal of the battery and the input power supply terminal of the battery compartment.

In some embodiments of the off-power grid production system, the battery compartment comprises at least one locking means for releasably locking the battery or the battery box inserted into the battery compartment.

Since vibrations can occur during the production process, which can cause the battery to be displaced and thus interrupt the power supply to the control unit, it is advantageous if a releasable locking for the connection between the output power supply terminal of the battery and the supply terminal of the battery compartment is provided, which is preferably formed by at least one magnet provided at the output power supply terminal of the battery and a counter-magnet element provided at the input power supply terminal of the battery compartment, or vice versa, and wherein the input power supply terminal is preferably a rotatable reverse polarity protected supply terminal with magnetic switch off. In a further embodiment, the locking is reverse polarity protected, by using the magnet and a bayonet locking, while in a first step the magnet switches the passage and after that the bayonet locking is closed. Independently or in addition, a releasable locking for the battery itself or the battery box may also be provided in the battery compartment to engage with corresponding counterlocking means on the battery or battery box when the battery or battery box is inserted.

In some embodiments of the off-power grid production system, the battery compartment includes at least one shock absorbing means for reducing vibration inside the battery compartment during operation of the production machine. On the one hand, this can serve to prevent damage to the battery and/or, on the other hand, prevent the battery from being displaced as a result of these vibrations.

In some embodiments of the off-power grid production system, the production machine includes a display showing the remaining capacity of the battery. The remaining capacity of the battery may also be shown on a mobile device such as a smart phone via wireless data transmission.

According to a second aspect, a production machine is provided for producing contamination-sensitive products, in particular a clipping machine for producing sausage-shaped products, having a machine housing and at least one battery compartment for accommodating at least one rechargeable electric battery and having at least one input power supply terminal in communication with a control unit for supplying the control unit with power by said at least one battery, wherein the production machine is adapted to be used in the off-power grid production system.

According to a third aspect, a preferably rechargeable battery is provided for supplying a control unit of a production machine for producing contamination-sensitive products, in particular a clipping machine for producing sausage-shaped products, with power having at least one output power supply terminal and positioning means for positioning the battery when inserted into a battery compartment of the production machine wherein the battery is adapted to be used in the off-power grid production system.

Further advantages and preferred embodiments of the present invention will be described in the following together with the drawings listed below. The expressions "left", "right", "below" and "above" used in the following description are referred to the drawings in an alignment such that the reference numbers and the notation of the figures used can be read in normal orientation.

It shall be understood that a preferred embodiment of the present invention can also be any combination of the dependent claims or above embodiments with the respective independent claim.

### BRIEF DESCRIPTION OF THE DRAWINGS

- Fig. 1: shows a perspective front view of a production machine being part of an off-power grid production system according to an embodiment of the present invention.
- Fig. 2: shows a perspective back view of the production machine depicted in Fig. 1.
- Fig. 3: shows a perspective view of an opened machine housing of the production machine being part of the off-power grid production system including a control unit, a battery box and a battery compartment.
- Fig. 4: shows a perspective view of the battery box of the off-power grid production machine including a battery.
- Fig. 5: shows a top view of the battery box of the off-power grid production machine including the battery and a rotatable reverse polarity protected supply terminal with magnetic switching/actuation.
- Fig. 6: shows a sectional view of the battery box of the off-power grid production machine including the battery.
- Fig. 7: shows a sectional view of the machine housing of the off-power grid production machine with an inserted battery box.

### DETAILED DESCRIPTION

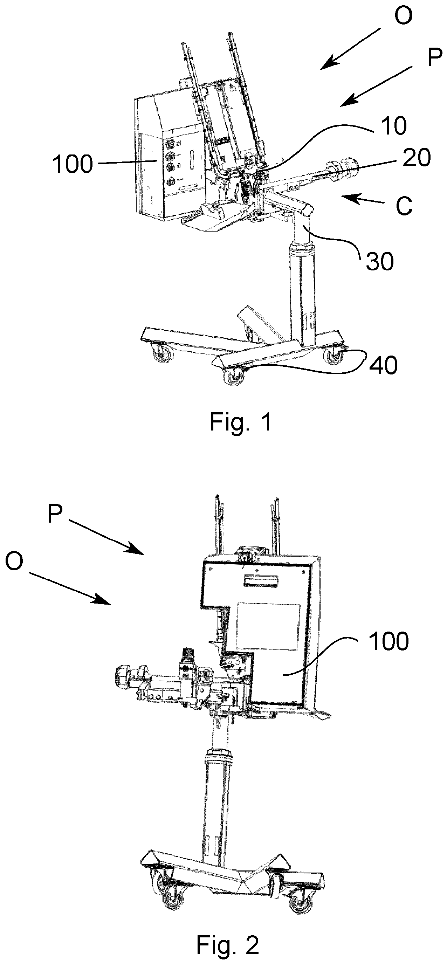

Figs. 1 and 2 show perspective front and back views of a production machine P/C for producing sausage shaped-products, like sausages which is a component of an off-power grid production system O according to a preferred embodiment of the present invention. According to this embodiment, off-power grid production system O comprises a production machine P for producing contamination-sensitive products which in the present embodiment is a clipping machine C for producing sausage shaped-products. Clipping machine C/P consists of a clipping mechanism 10 and a filling tube 20 on which a sausage casing is placed (not shown). The front end of the sausage casing is closed by means of a first clip. Then, sausage meat is pressed into the sausage casing through filling tube 20 and finally the end of the sausage is closed by means of a second clip.

In the present embodiment, clipping machine C/P is mounted on a height-adjustable framework 30 that can be moved by means of rollers 40.

Clipping machine C/P further comprises a machine housing 100, which is arranged on the back side of clipping machine C/P, which can be best seen in Fig. 2. Machine housing 100 contains, inter alia, a control unit 200 for controlling the process of clipping machine C/P and a battery 300 for supplying control unit 200 with electric power. In other words, control unit 200 and battery 300 are accommodated in machine housing 100.

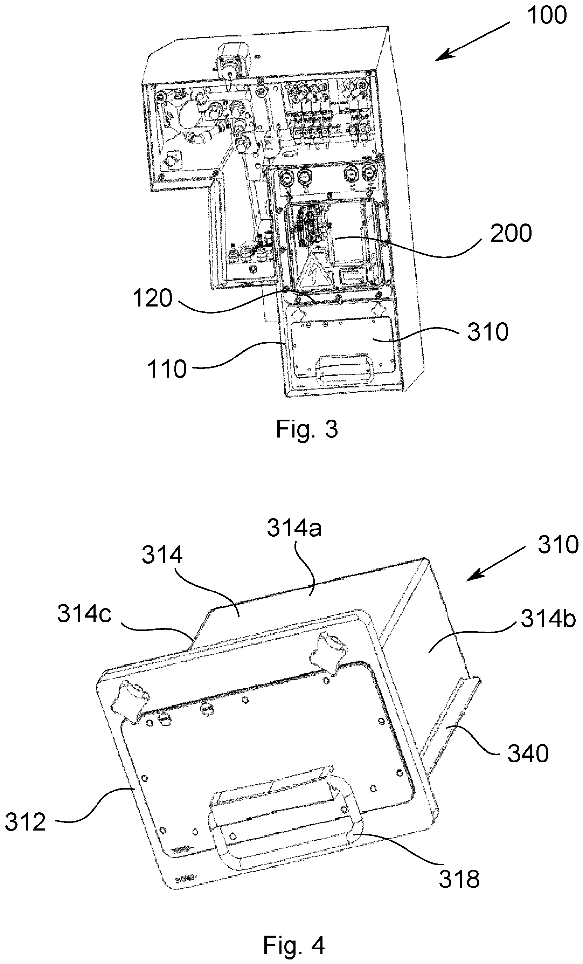

As can be seen in Fig. 3, machine housing 100 further includes a battery compartment 110, which separates control unit 200 from battery 300. In particular, machine housing 100 comprises a separating wall 120, which separates machine housing 100 in two compartments. Separating wall 120 comprises a through hole via which control unit 200 is electrically connected with battery 300. Further, battery compartment includes an input power supply terminal 320 in communication with control unit 200 for supplying control unit 200 with power via battery 300. Input power supply terminal 320 being electrically conductively connectable to an output power supply terminal 330 of battery 300.

Input power supply terminal 320 of battery compartment 110 is formed by a fluid-tight connecting cable adapted to be releasably connected to output power supply terminal 330 of battery 300 in a fluid-tight manner via a plug or the like.

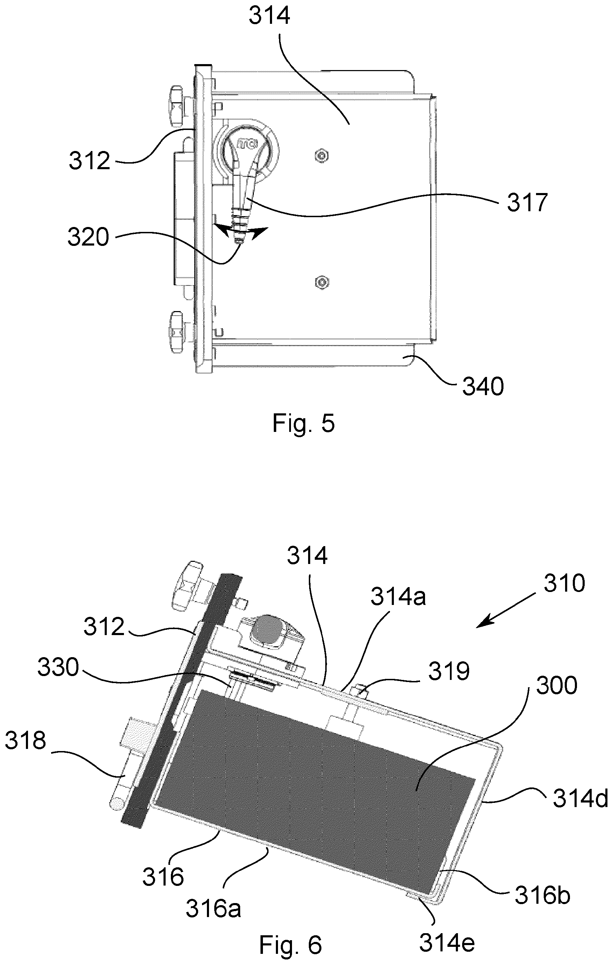

Fig. 4 shows a battery box 310 in which battery 300 is accommodated. Battery box 310, which has the shape of a cuboid enclosing a cavity to accommodate a battery 300 comprises a front plate 312, an upper segment 314 consisting of an upper plate 314a, two opposing side plates 314b, 314c, a back plate 314d and partly a lower plate 314e, and a lower segment 316 consisting of a lower plate 316a and partly a back plate 316b. The structure of battery box 310 is best seen in Fig. 6.

Not only one battery 300 can be accommodated in battery box 310, but also several batteries 300 that are electrically connected to each other to supply power to control unit 200.

Further, battery box 310 has handling means 318 formed e.g. by a foldable handle for inserting and removing battery box 310 into and from battery compartment 110 and which are attached to front plate 312.

To close battery box 310, lower plate 314e of upper segment 314 of battery box 310 is pushed or rather placed over lower plate 316a of lower segment 316 of battery box. After that, front plate 312 is screwed to upper segment 314. Subsequently, a screw 319 or the like which has a stop element on its end is pushed or rather screwed through upper plate 314a of upper segment 314 of battery box 310 until the stop element reaches battery 300 in order to fix battery 300 in a predefined position inside battery box 310. According to this, battery box 310 is closed safely.

Fig. 5 shows a top view of battery box 310. Upper segment 314 of battery box 310 includes a connecting terminal 317 for connecting output power supply terminal 330 of battery 300 to input power supply terminal 320 of battery compartment 110.

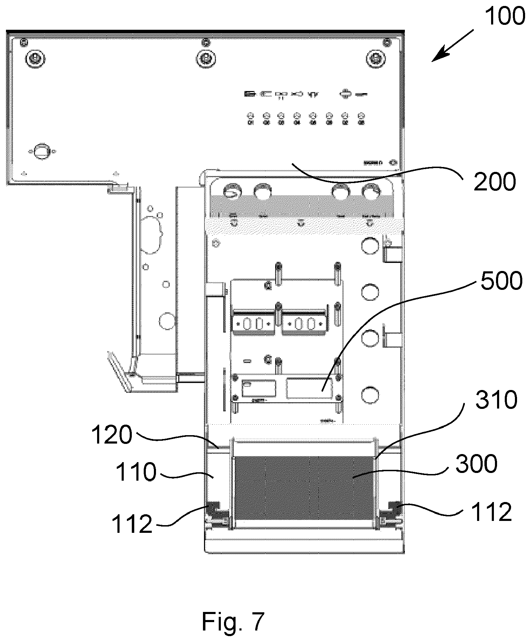

As can be seen from Fig. 7, battery compartment 110 comprises horizontal opposing positioning means 112 on its inner side walls for positioning battery 300 when inserted into battery compartment 110. Battery box 310 has counter-positioning means 340 on its outer side plates 314b, 314c which cooperate with positioning means 112 of battery compartment 110 when battery box 310 is inserted into battery compartment 110. Instead, battery 300 could be used without battery box 310. In this case, battery 300 has counter-positioning means 340 which cooperate with positioning means 112 of battery compartment 110 when battery 300 is inserted into battery compartment 110.

The bottom of battery compartment 110 comprises a drain hole for draining fluid inside battery compartment 110.

Further, battery box 310 has a charging terminal for charging battery 300 received in battery box 310, which is accessible with the battery box 310 inserted in the battery compartment 110.

### REFERENCE SIGNS

- O: off-power grid production system
- P: production machine
- C: clipping machine
- 10: clipping mechanism
- 20: filling tube
- 30: height-adjustable table
- 40: rollers
- 100: machine housing
- 110: battery compartment
- 112: positioning means
- 120: separating wall
- 200: control unit
- 300: battery
- 310: battery box
- 312: a front plate
- 314: upper segment
- 314a: upper plate
- 314b: side plate
- 314c: side plate
- 314d: back plate
- 314e: lower plate
- 316: lower segment
- 316a: lower plate
- 316b: back plate
- 317: connecting terminal
- 318: handling means
- 319: screw
- 320: input power supply terminal
- 330: output power supply terminal
- 340: counter-positioning means
- 500: display

## Claims

1. An off-power grid production system (O), comprising:
a production machine (P) for producing contamination-sensitive products, in particular a clipping machine (C) for producing sausage-shaped products, having a machine housing (100);
at least one control unit (200) for controlling at least the production machine (P), arranged in the machine housing (100) of the production machine (P);
at least one preferably rechargeable battery (300) for supplying the control unit (200) with power having at least one output power supply terminal (330); and
at least one battery compartment (110) for releasably accommodating the battery (300), said battery compartment (110) being provided on the machine housing (100) and having at least one input power supply terminal (320) in communication with the control unit (200) for supplying the control unit (200) with power, the input power supply terminal (320) being electrically conductively connectable to the output power supply terminal (330) of the battery (300).

2. The system (O) according to claim 1,
wherein the input power supply terminal (320) of the battery compartment (110) is formed by at least one preferably fluid-tight connecting cable adapted to be releasably connected to the output power supply terminal (330) of the battery (300) in a fluid-tight manner via at least one plug.

3. The system (O) according to claim 1 or 2,
wherein the battery compartment (110) is accessible from outside the machine housing (100), preferably by means of a door being further preferably releasably lockable.

4. The system (O) according to any one of claims 1 to 3,
wherein the production machine (P) includes a display (500) showing the remaining capacity of the battery (300) and/or the remaining capacity of the battery (300) is shown on a mobile device such as a smart phone via wireless data transmission.

5. The system (O) according to any one of claims 1 to 4,
wherein the battery compartment (110) has positioning means (112) for positioning the battery (300) when inserted into the battery compartment (110), and wherein preferably the battery (300) has counter-positioning means (340) which cooperate with the positioning means (112) of the battery compartment (110) when the battery (300) is inserted into the battery compartment (110).

6. The system (O) according to any one of claims 1 to 5,
wherein the bottom of the battery compartment (110) comprises at least one drain hole for draining fluid inside the battery compartment (110).

7. The system (O) according to any one of claims 1 to 6,
further comprising a preferably fluid-tight battery box (310) for reversibly receiving the at least one battery (300), the battery box (310) being reversibly insertable into the battery compartment (110) and having at least a connecting terminal (317) for connecting the output power supply terminal (330) of the battery (300) to the input power supply terminal (320) of the battery compartment (110).

8. The system (O) according to claim 7,
wherein the battery box (310) has a charging terminal for charging the rechargeable battery (300) received in the battery box (310), which is preferably accessible with the battery box (310) inserted in the battery compartment (110).

9. The system (O) according to any one of claims 7 or 8,
wherein the battery box (310) has handling means (318) for inserting and removing the battery box (310) into and from the battery compartment (110).

10. The system (O) according to any one of claims 7 to 9, when dependent on claim 2,
wherein the connecting terminal (317) of the battery box (310) is provided by at least one socket into which the plug of the connecting cable is detachably insertable for establishing an electrical connection between the output power supply terminal (330) of the battery (300) and the input power supply terminal (320) of the battery compartment (110).

11. The system (O) according to any one of claims 1 to 6 or 7 to 10,
wherein the battery compartment (110) comprises at least one locking means for releasably locking the battery (300) or the battery box (310) inserted into the battery compartment (110).

12. The system (O) according to any one of claims 1 to 11,
wherein a releasable locking for the connection between the output power supply terminal (330) of the battery (300) and the supply terminal of the battery compartment (110) is provided, which is preferably formed by at least one magnet provided at the output power supply terminal (330) of the battery (300) and a counter-magnet element provided at the input power supply terminal (320) of the battery compartment (110), or vice versa, and wherein the input power supply terminal (320) is preferably a rotatable reverse polarity protected supply terminal with magnetic switch off.

13. The system (O) according to any one of claims 1 to 12,
wherein the battery compartment (110) includes at least one shock absorbing means for reducing vibration inside the battery compartment (110) during operation of the production machine (P).

14. A production machine (P) for producing contamination-sensitive products, in particular a clipping machine (C) for producing sausage-shaped products, having a machine housing (100) and at least one battery compartment (110) for accommodating at least one rechargeable electric battery (300) and having at least one input power supply terminal (320) in communication with a control unit (200) for supplying the control unit (200) with power by said at least one battery (300), wherein the production machine (P) is adapted to be used in the system (O) according to any one of claims 1 to 13.

15. A preferably rechargeable battery (300) for supplying a control unit (200) of a production machine (P) for producing contamination-sensitive products, in particular a clipping machine (C) for producing sausage-shaped products, with power having at least one output power supply terminal (330) and positioning means (112) for positioning the battery (300) when inserted into a battery compartment (110) of the production machine (P) wherein the battery (300) is adapted to be used in the system (O) according to any one of claims 1 to 13.
